# EUROPEAN PATENT APPLICATION

(11) **EP 4 780 110 A1**
(43) Date of publication of application: **22.07.2026**
(21) Application number: 24881474.1
(22) Date of filing: 15.10.2024
(51) Int. Cl.: H04W 72/23

(54) **COMMUNICATION METHOD AND COMMUNICATION APPARATUS**

(30) Priority: 28.10.2023 CN 202311422423
(71) Applicant: HUAWEI TECHNOLOGIES CO., LTD., Shenzhen 518129 (CN)
(72) Inventor: XIANG, Hongyu, Shenzhen, Guangdong 518129 (CN); XU, Bin, Shenzhen, Guangdong 518129 (CN); ZHANG, Peng, Shenzhen, Guangdong 518129 (CN)
(74) Representative: Pfenning, Meinig & Partner mbB
(86) International application number: PCT/CN2024/124854
(87) International publication number: WO 2025/087108

(57) **Abstract**

This application provides a communication method and a communication apparatus. The method includes: A serving base station sends a first indication message, where the first indication message indicates that access of an MSS terminal to a cell is not allowed or access of the MSS terminal to a frequency band corresponding to the cell is not allowed. According to the method provided in this application, when a frequency band corresponding to an FSS terminal is reused by the MSS terminal, to avoid a case that the MSS accesses a non-permitted frequency band, a serving base station serving the FSS terminal may send first indication information to the MSS terminal, where the first indication information may indicate that access of the MSS terminal to a cell corresponding to the current serving base station is allowed or access of the MSS terminal to a frequency band corresponding to the current serving base station is not allowed; and the MSS terminal may reject access to the cell based on the first indication information. This resolves a problem in related technologies that when the frequency band corresponding to the FSS terminal is reused by the MSS terminal, the MSS terminal may access a non-permitted frequency band.

## Description

This application claims priority to Chinese Patent Application No. 2023114224238, filed with the China National Intellectual Property Administration on October 28, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Development of information technologies raises more urgent requirements on efficiency, mobility, diversity, and the like of communication. Currently, satellites play an irreplaceable role in some important fields such as space communication, aviation communication, and military communication. Satellite communication features a long communication distance, large coverage, flexible networking, and the like. Satellite services are classified into fixed satellite services (fixed satellite service, FSS) and mobile satellite services (Mobile satellite service, MSS), which are provided for both fixed terminals and various mobile terminals.

The two types of services (FSS and MSS) correspond to two types of terminals (MSS terminals and FSS terminals) that operate at different frequencies. To improve spectrum utilization, an FSS frequency band may be reused by the MSS terminal. However, in most cases, the MSS terminal can access only a part of frequency bands. Therefore, when the MSS terminal reuses the FSS frequency band, the MSS terminal may access a non-permitted frequency band, lowering a success rate of accessing a cell by the MSS terminal.

### SUMMARY

This application provides a communication method and a communication apparatus. In the method, a base station serving an FSS terminal sends a first indication message to an MSS terminal, to indicate whether the MSS terminal can access a cell served by the base station, thereby avoid access of the MSS terminal to an unsupported band.

According to a first aspect, a communication method is provided. The method provided in the first aspect may be performed by a serving base station, or may be performed by a chip configured in the serving base station. This is not limited in this application.

Specifically, the method includes: The serving base station sends a first indication message, where the first indication message indicates that access of an MSS terminal to a cell is not allowed or access of the MSS terminal to a frequency band corresponding to the cell is not allowed.

According to the communication method provided in the first aspect, when a frequency band corresponding to an FSS terminal is reused by the MSS terminal, to avoid a case that the MSS accesses a non-permitted frequency band, a serving base station serving the FSS terminal may send a first indication message to the MSS terminal, where the first indication message may indicate that a cell corresponding to the current serving base station does not allow access of the MSS terminal or access of the MSS terminal is not allowed on a frequency band corresponding to the current serving base station; and the MSS terminal may reject access to the cell based on the first indication message. This resolves a problem in the related technology that when the frequency band corresponding to the FSS terminal is reused by the MSS terminal, the MSS terminal may access a non-permitted frequency band.

Optionally, the MSS terminal is a mobile terminal in a non-terrestrial network NTN, and the serving base station that sends the first indication message to the MSS terminal serves the FSS terminal in the NTN.

For example, available FSS frequency bands include {A, B}. The frequency band set A is dedicated to the FSS UE, and the frequency band set B is reused by the MSS UE. Therefore, the FSS UE can perform access on all bands, and the MSS UE can perform access only on a part of frequencies (that is, perform access on the frequency band set B, and cannot perform access on the frequency band set A). Therefore, a base station corresponding to the frequency band A serving the FSS terminal and a base station corresponding to the frequency band B serving the FSS terminal may send the first indication message to the MSS terminal. The first indication message indicates a frequency band of a current serving cell and whether access of the MSS terminal is allowed on the band. For example, the base station corresponding to the frequency band A serving the FSS terminal sends the first indication message to the MSS terminal, and the first indication message may indicate that access of the MSS terminal is not allowed, or may indicate that a frequency band of a cell corresponding to the base station is the frequency band A, and access of the MSS terminal is not allowed. In this case, after receiving the first indication message, the MSS does not access the cell, thereby resolving a problem that the MSS terminal may access a non-permitted frequency band.

In a possible implementation of the first aspect, the first indication message is carried in a MIB or a SIB1.

In a possible implementation of the first aspect, the method further includes: The serving base station sends a second indication message, where the second indication message indicates an inter-frequency frequency and whether access of the MSS terminal to the inter-frequency frequency is allowed.

In this implementation, when the serving base station does not allow access of the MSS terminal, the serving base station may further indicate an inter-frequency frequency to the MSS terminal and whether access of the MSS terminal to the inter-frequency frequency is allowed, and the MSS terminal may perform measurement based on the indicated an inter-frequency frequency, instead of performing blind selection for an inter-frequency frequency in a cell reselection process, and causing a low success rate of accessing a cell.

It should be noted that, when the MSS terminal is in an idle state, the cell corresponding to the inter-frequency frequency may belong to a neighboring cell base station or the serving base station. This is not specifically limited in this embodiment of this application.

In a possible implementation of the first aspect, the second message is carried in a SIB4.

According to a second aspect, a communication method is provided. The method provided in the second aspect may be performed by an MSS terminal, or may be performed by a chip configured in the MSS terminal. This is not limited in this application.

Specifically, the method includes: The MSS terminal receives a first indication message, where the first indication message indicates that access of the MSS terminal to a cell is not allowed or access of the MSS terminal to a frequency band corresponding to the cell is not allowed. The MSS terminal rejects, based on the first indication message, access to the cell corresponding to a serving base station.

According to the communication method provided in the second aspect, when the MSS terminal reuses the frequency band used by an FSS terminal, to avoid access to a non-permitted frequency band, the MSS terminal receives a first indication message sent by the FSS terminal, where the first indication message may indicate that a cell corresponding to the current serving base station does not allow access of the MSS terminal or access of the MSS terminal is not allowed on a frequency band corresponding to the current serving base station; and the MSS terminal may reject access to the cell based on the first indication message. This resolves a problem in the related technology that when the frequency band corresponding to the FSS terminal is reused by the MSS terminal, the MSS terminal may access a non-permitted frequency band.

Optionally, the MSS terminal is a mobile terminal in a non-terrestrial network NTN.

Optionally, after receiving the first indication message, the MSS terminal ignores an existing cellbarred indication in the MIB or existing cellBarredNTN.

In a possible implementation of the second aspect, the first indication message is carried in a SIB1 or a MIB.

In a possible implementation of the second aspect, the method further includes: The MSS terminal receives a second indication message, where the second indication message indicates an inter-frequency frequency and whether access of the MSS terminal to the inter-frequency frequency is allowed. The MSS terminal performs inter-frequency measurement based on the second indication message.

In this implementation, the MSS terminal may perform measurement based on the indicated an inter-frequency frequency, instead of performing blind selection for an inter-frequency frequency in a cell reselection process, and causing a low success rate of accessing a cell.

In a possible implementation of the second aspect, the second indication message is carried in a SIB4.

According to a third aspect, a communication method is provided. The method provided in the third aspect may be performed by a serving base station, or may be performed by a chip configured in the serving base station. This is not limited in this application.

Specifically, the method includes: The serving base station obtains frequency information of a neighboring cell base station and information about a terminal device, where the frequency information includes a frequency and whether access of an MSS terminal to the frequency is allowed, the information about the terminal device includes type information and service information, and the type information includes an MSS terminal and an FSS terminal. The serving base station delivers a measurement configuration to the terminal device based on the frequency information of the neighboring cell base station and the information about the terminal device, where a frequency in the measurement configuration is a frequency to which access of the MSS terminal is allowed.

According to the communication method provided in the third aspect, the serving base station may determine, based on the obtained frequency information of the neighboring cell base station and the obtained service information of the terminal device, a frequency to which access of the MSS terminal can be performed. Therefore, a measurement frequency in the measurement configuration delivered by the serving base station to the MSS terminal is a frequency to which access of the MSS terminal is allowed. This resolves a problem in the related technology that the MSS terminal may perform access on an unsupported frequency.

In a possible implementation of the third aspect, that the serving base station obtains the frequency information of the neighboring cell base station includes: receiving an Xn message sent by the neighboring cell base station, where the message carries the frequency information of the neighboring cell base station, and the Xn message includes any one of an Xn setup message and an NG-RAN node configuration update message.

In a possible implementation of the third aspect, the obtaining the type information of the terminal device includes: receiving user assistance information sent by the terminal device, where the user assistance information indicates the type information of the terminal device.

In a possible implementation of the third aspect, the obtaining the type information of the terminal device includes: receiving capability reporting information of the terminal device, where the capability reporting information indicates the type information of the terminal device.

In a possible implementation of the third aspect, the obtaining service information of the terminal device includes: obtaining subscription information sent by a mobility management function AMF, where the subscription information indicates the service information of the terminal device.

According to a fourth aspect, a communication method is provided. The method provided in the fourth aspect may be performed by a target base station, or may be performed by a chip configured in the target base station. This is not limited in this application.

Specifically, the method includes: The target base station receives a handover request sent by a source base station, where the handover request carries information about a terminal device, the information about the terminal device includes type information and service information, and the type information includes an MSS terminal and an FSS terminal. The target base station determines, based on frequency information of a current cell and the information about the terminal device, whether access of the MSS terminal is allowed. The target base station sends a handover request feedback message to the source base station, where the handover request message includes: access of the MSS terminal is allowed or access of the MSS terminal is not allowed.

According to the communication method provided in the fourth aspect, after receiving the information about the terminal device and the frequency information of the current cell that are included in the source base station, the target base station may determine whether the frequency information corresponding to access of the MSS terminal to the current cell is allowed. If the access of the MSS terminal is allowed, access allowed is fed back to the source base station that access is allowed. If the access of the MSS terminal is not allowed, access not allowed is fed back to the source base station. According to this method, the MSS terminal can be prevented from performing access on an unsupported frequency during cell handover.

In a possible implementation of the fourth aspect, the target base station may obtain the type information of the terminal device by receiving user assistance information sent by the terminal device, where the user assistance information indicates the type information of the terminal device.

In a possible implementation of the fourth aspect, the target base station may obtain the type information of the terminal device by receiving capability reporting information of the terminal device, where the capability reporting information indicates the type information of the terminal device.

In a possible implementation of the fourth aspect, the target base station may obtain the service information of the terminal device by obtaining subscription information sent by a mobility management function AMF, where the subscription information indicates the service information of the terminal device.

According to a fifth aspect, a communication method is provided. The method is applied to a source base station, and the method includes: The source base station sends a handover request message to at least one target base station, where the handover request message carries frequency query information, and the frequency query information includes: querying for a frequency of a current cell corresponding to the target base station and whether access of an MSS terminal to the frequency is allowed; receives a handover request feedback message sent by the at least one target base station, where the handover request feedback message carries frequency feedback information, and the frequency feedback information includes the frequency of the current cell respectively corresponding to the at least one target base station and whether access of the MSS terminal to the frequency is allowed; and determines a target handover cell based on at least one piece of frequency feedback information and information about a terminal device, where access of the terminal device is supported on a frequency corresponding to the target handover cell.

According to the communication method provided in the fifth aspect, after obtaining information that is fed back by the at least one target base station and that is about the frequency of the current cell and whether access of the MSS terminal to the frequency is allowed, the source base station determines a target handover cell from the at least one target base station based on the information about the terminal device, where access of the MSS terminal to the frequency is allowed corresponding to the target handover cell. In the method, determining performed by a source base station can prevent the MSS terminal from performing access on an unsupported frequency during cell handover.

In a possible implementation of the fifth aspect, the source base station may obtain the type information of the terminal device by receiving user assistance information sent by the terminal device, where the user assistance information indicates the type information of the terminal device.

In a possible implementation of the fifth aspect, the source base station may obtain the type information of the terminal device by receiving capability reporting information of the terminal device, where the capability reporting information indicates the type information of the terminal device.

In a possible implementation of the fifth aspect, the source base station may obtain the service information of the terminal device by obtaining subscription information sent by a mobility management function AMF, where the subscription information indicates the service information of the terminal device.

According to a sixth aspect, a communication method is provided. The method is applied to a target base station, and the method includes: receiving a handover request message sent by a source base station, where the handover request message carries frequency query information, and the frequency query information includes: querying for a frequency of a current cell corresponding to the target base station and whether access of an MSS terminal to the frequency is allowed; and sending handover request feedback information to the source base station based on the handover request message, where the handover request feedback information carries frequency feedback information, and the frequency feedback information includes a frequency of a current cell respectively corresponding to at least one target base station and whether access of the MSS terminal to the frequency is allowed, where the frequency feedback information is used by the source base station to determine a target handover cell, and access of the MSS terminal is supported on a frequency corresponding to the target handover cell.

According to the communication method provided in the sixth aspect, after receiving the frequency query information carried in the handover request message, the target base station may feed back, to the source base station, the frequency of the current cell and whether access of the MSS terminal to the frequency is allowed. In this way, the source base station can determine a target handover cell from the at least one target base station based on the service information of the terminal device and the frequency feedback information, where access of the MSS terminal is allowed on a frequency corresponding to the target handover cell. In the method, determining performed by a source base station can prevent the MSS terminal from performing access on an unsupported frequency during cell handover.

According to a seventh aspect, a communication system is provided. The system includes a serving base station and an MSS terminal. The serving base station is configured to perform the method according to any one of the first aspect or the possible implementations of the first aspect, and the MSS terminal is configured to perform the method according to any one of the second aspect or the possible implementations of the second aspect.

According to an eighth aspect, a communication system is provided. The system includes a source base station and a target base station. The source base station is configured to perform the method according to any one of the fifth aspect or the possible implementations of the fifth aspect, and the target base station is configured to perform the method according to any one of the sixth aspect or the possible implementations of the sixth aspect.

According to a ninth aspect, a communication apparatus is provided. The communication apparatus includes units configured to perform the steps in any one of the first aspect or the possible implementations of the first aspect, units configured to perform the steps in any one of the second aspect or the possible implementations of the second aspect, units configured to perform the steps in any one of the third aspect or the possible implementations of the third aspect, units configured to perform the steps in any one of the fourth aspect or the possible implementations of the fourth aspect, units configured to perform the steps in any one of the fifth aspect or the possible implementations of the fourth aspect, or units configured to perform the steps in the sixth aspect.

According to a tenth aspect, a communication apparatus is provided. The communication apparatus includes at least one processor and a memory. The processor is coupled to the memory, and the memory stores program instructions. When the program instructions stored in the memory are executed by the processor, the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, or the method according to the sixth aspect is performed.

According to an eleventh aspect, a communication apparatus is provided. The communication apparatus includes at least one processor and an interface circuit. The at least one processor is configured to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, or the method according to the sixth aspect.

According to a twelfth aspect, a computer program product is provided. The computer program product includes a computer program. When being executed by a processor, the computer program is configured to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, or the method according to the sixth aspect.

According to a thirteenth aspect, a computer-readable storage medium is provided. The computer-readable storage medium stores a computer program. When being executed, the computer program is configured to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the fifth aspect or the possible implementations of the fifth aspect, or the method according to the sixth aspect.

According to a fourteenth aspect, a chip is provided. The chip includes a processor, configured to invoke a computer program from a memory and run the computer program, so that a communication device on which the chip is installed performs the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, the method according to any one of the possible implementations of the fifth aspect, or the method according to the sixth aspect.

### BRIEF DESCRIPTION OF DRAWINGS

FIG. 1 is a block diagram of an architecture of a wireless communication system applicable to this application;
FIG. 2 is an interaction diagram of a communication method 200 according to an embodiment of this application;
FIG. 3 is a diagram of a scenario of mobility management in a connected state;
FIG. 4 is an interaction diagram of another communication method 400 according to an embodiment of this application;
FIG. 5 is an interaction diagram of another communication method 500 according to an embodiment of this application;
FIG. 6 is an interaction diagram of another communication method 600 according to an embodiment of this application;
FIG. 7 is a block diagram of a communication apparatus 700 according to an embodiment of this application;
FIG. 8 is a block diagram of another communication apparatus 800 according to an embodiment of this application;
FIG. 9 is a block diagram of a communication apparatus 900 according to an embodiment of this application;
FIG. 10 is a block diagram of another communication apparatus 1000 according to an embodiment of this application;
FIG. 11 is a diagram of a structure of a terminal device 1100 according to this application;
FIG. 12 is a diagram of a structure of a network device 1200 according to an embodiment of this application; and
FIG. 13 is a diagram of a chip system according to an embodiment of this application.

### DESCRIPTION OF EMBODIMENTS

The following clearly and completely describes the technical solutions in embodiments of this application with reference to the accompanying drawings in embodiments of this application.

The technical solutions of embodiments of this application may be applied to various communication systems, such as a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a future 5th generation (5th Generation, 5G) system, or a new radio (New Radio, NR) system.

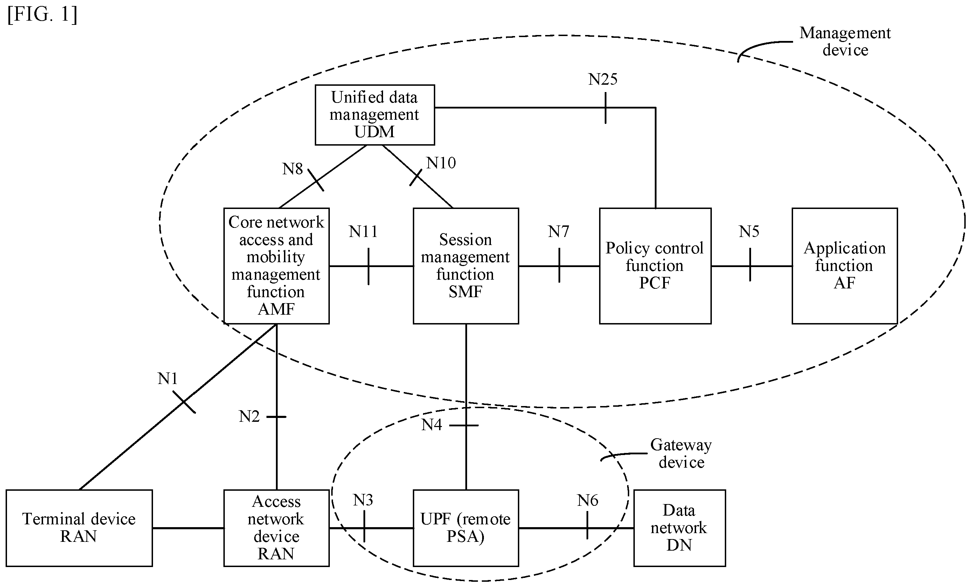

FIG. 1 is a block diagram of an architecture of a wireless communication system applicable to this application. As shown in FIG. 1, the architecture of the system includes a terminal apparatus, an access network device, a management device, a gateway device, and a data network (data network, DN). The terminal apparatus in FIG. 1 may be configured to connect, through a radio air interface, to the access network device deployed by an operator, and then connect to the data network via the gateway device. The access network device is mainly configured to implement functions such as a radio physical layer function, resource scheduling and radio resource management, radio access control, and mobility management. The management device is mainly configured to perform device registration, security authentication, mobility management, location management, and the like of the terminal apparatus. The gateway device is mainly configured to: establish a channel with the terminal apparatus, and forward a data packet between the terminal apparatus and an external data network through the channel. The data network may correspond to a plurality of different service domains, such as an IP multimedia subsystem (IP multimedia subsystem, IMS), the internet (Internet), an internet protocol television (internet protocol television, IPTV), and other operator service domains, and is mainly configured to provide a plurality of data services for the terminal apparatus. The data network may include network devices such as a server (including a server providing a multicast service), a router, and a gateway. A terminal that expects to receive a data packet of an IP multicast service needs to request, according to a group management protocol, to join/leave a multicast IP address corresponding to a multicast service, to start/end receiving the multicast service. A group management protocol for IP multicast includes an internet group management protocol (Internet group management protocol, IGMP) in IPv4, and correspondingly includes a multicast listener discovery protocol (multicast listener discovery protocol, MLD) in IPv6. It should be noted that, FIG. 1 is merely an example diagram of the architecture. In addition to the functional units shown in FIG. 1, the network architecture may further include other functional units or functional network elements. This is not limited in embodiments of this application.

When the communication network shown in FIG. 1 is a 5G network, the foregoing terminal apparatus (which may also be referred to as a terminal device) may be user equipment (user equipment, UE), for example, a mobile phone or a computer, or may be a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communication device, a handheld compute device, a satellite wireless device, a wireless modem card, a television set top box (set top box, STB), customer premises equipment (customer premise equipment, CPE), and/or another device for communication in a wireless system. The foregoing access network device may be an access network (access network, AN)/radio access network (radio access network, RAN) device, or a network including a plurality of 5G-AN/5G-RAN nodes. The 5G-AN/5G-RAN node may be: an access node (access point, AP), a next generation NodeB (NR nodeB, gNB), a gNB in which a central unit (central unit, CU) is separated from a distributed unit (distributed unit, DU), a transmission reception point (transmission receive point, TRP), a transmission point (transmission point, TP), or another access node. The management device may include a unified data management (unified data management, UDM) network element, an access and mobility management function (access and mobility function, AMF), a session management function (session management function, SMF), a policy control function (policy control function, PCF), an application function (application function, AF), and the like. The gateway device may include functional units, for example, a user plane function (user plane function, UPF). These functional units may work independently, or may be integrated together to implement some control functions. For example, the AMF, the SMF, and the PCF may be integrated together as the management device, to implement access control and mobility management functions such as access authentication, security encryption, and location registration of the terminal apparatus, session management functions such as establishment, release, and modification of a user plane transmission path, and a function of analyzing some slice (slice)-related data (for example, congestion) and terminal apparatus-related data. The UPF, serving as the gateway device, mainly completes functions such as routing and forwarding of user plane data, for example, is responsible for data packet filtering, data transmission/forwarding, rate control, charging information generation, and the like for the terminal apparatus. In addition, in the 5G system, to selectively route service traffic to the data network, the session management network element may control a data path of a protocol data unit (protocol data unit, PDU) session. In this way, the PDU session and the data network may correspond to a plurality of interfaces, that is, a plurality of session anchors may exist for a same PDU session. A user plane function (user plane function, UPF) terminating these interfaces is referred to as a PDU session anchor (PDU session anchor, PSA) or an anchor UPF. Each anchor of the PDU session may further provide a different ingress to the same DN.

In the 5G network shown in FIG. 1, connections may be established between functional units through next generation (next generation, NG) interfaces to implement communication. For example, the terminal apparatus establishes an air interface connection with the RAN device through a new radio (new radio, NR) interface for transmission of user plane data and control plane signaling; the terminal apparatus may establish a control plane signaling connection with the AMF through an NG interface 1 (N1 for short); the AN/RAN device like a new radio NodeB (NR NodeB, gNB) may establish a user plane data connection with a traffic steering UPF through an NG interface 3 (N3 for short); the AN/RAN device may establish a control plane signaling connection with the AMF through an NG interface 2 (N2 for short); the anchor UPF may establish a control plane signaling connection with the SMF through an NG interface 4 (N4 for short); the anchor UPF may exchange user plane data with the data network through an NG interface 6 (N6 for short); the AMF may establish a control plane signaling connection with the SMF through an NG interface 11 (N11 for short); the SMF may establish a control plane signaling connection with the PCF through an NG interface 7 (N7 for short); and the PCF may establish a connection with the AF through an NG interface 5 (N5 for short). It should be noted that, FIG. 1 is merely an example diagram of the architecture. In addition to the functional units shown in FIG. 1, the network architecture may further include other functional units or functional network elements. This is not limited in embodiments of this application.

When the communication network shown in FIG. 1 is a 4G network, for the terminal apparatus, refer to the related descriptions of the terminal apparatus in FIG. 1, and details are not described herein again. The access network device may be a NodeB (nodeB, NB), an evolved NodeB (evolution nodeB, eNB), a TRP, a TP, an AP, or another access unit. The core network device may include management devices such as a mobility management entity (mobility management entity, MME) and a policy and charging rules function (policy and charging rules function, PCRF), and gateway devices such as a serving gateway (serving gateway, SGW), a packet data network gateway (packet data network gateway, PGW), and a local gateway (local gateway, LGW).

It should be understood that a name of an interface between network elements in this application is merely an example, and the interface between the network elements may have another name. The name of the interface is not limited in this application.

The terminal apparatus in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal apparatus may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a compute device, another processing device connected to a wireless modem, a vehicle-mounted device, a wearable device, a terminal apparatus in a future 5G network, a terminal apparatus in a future evolved public land mobile communication network (Public Land Mobile Network, PLMN), or the like. This is not limited in embodiments of this application.

The access network device in embodiments of this application may be a device configured to communicate with the terminal apparatus and the core network device. The access network device may be a base transceiver station (Base Transceiver Station, BTS) in a global system for mobile communications (Global System for Mobile communications, GSM) or a code division multiple access (Code Division Multiple Access, CDMA) system, may be a NodeB (NodeB, NB) in a wideband code division multiple access (Wideband Code Division Multiple Access, WCDMA) system, may be an evolved NodeB (Evolved NodeB, eNB or eNodeB) in an LTE system, or may be a radio controller in a cloud radio access network (Cloud Radio Access Network, CRAN) scenario. Alternatively, the access network device may be a relay station, an access point, a vehicle-mounted device, a wearable device, a network device in a future 5G network, an access network device in a future evolved PLMN network, or the like. This is not limited in embodiments of this application.

In the 5G network, technical research on a non-terrestrial network (Non-Terrestrial Network, NTN) is introduced. The NTN is a communication network in which an aircraft (airplane/uncrewed aerial vehicle), a satellite, or the like is introduced into the communication system as a relay node or a base station. In the NTN network, because a satellite device participates in a communication process, when data is sent between UE and a base station, the data needs to be transmitted to the satellite. In this case, a long propagation distance causes a high propagation delay, and consequently, round-trip time (round-trip time, RTT) of data transmission may reach tens of milliseconds to hundreds of milliseconds. However, the RTT in a conventional terrestrial communication network is several milliseconds or less.

According to the International Telecommunication Union (International Telecommunication Union, ITU) standard, satellite services in the communication system are classified into two types: a mobile satellite service (Mobile satellite service, MSS) and a fixed satellite service (fixed satellite service, FSS).

The FSS is service for ground terminals at fixed positions, including one fixed point or several fixed points in a fixed area, for example, feeder link in the NTN: geosynchronous orbit (Geosynchronous orbit) or geostationary orbit (Geostationary orbit, GSO) satellite-gateway station. The MSS is a service for mobile terminals, for example, service link in the NTN: movable UE or non-geostationary orbit (Non-Geostationary orbit, NGSO) satellite-gateway station.

Correspondingly, the two types of services (FSS and the MSS) correspond to two types of terminals (MSS terminals and FSS terminals) that operate at different frequencies. For example, an S frequency band in R17 is an MSS frequency band, and a Ka band in R18 is an FSS frequency band. In related technologies, the FSS terminal and the MSS terminal may operate different frequency bands, so that interference management can be implemented on the FSS terminal, to avoid impact on FSS communication. For example, it is assumed that the FSS terminal uses the FSS frequency band in an area A. Because the FSS terminal is bound to the area A, it is only necessary to prevent other UEs from using the FSS frequency band within the specified area A (for example, the other UEs may use the MSS frequency band within the specified area A), to complete interference management.

In related technologies, the FSS frequency band may be reused by the MSS terminal, to improve spectrum utilization. For example, in the area A, available frequency bands of the FSS include {A, B}, and the frequency band set A is dedicated to the FSS terminal. To improve spectrum utilization, when the MSS terminal moves to the area A, the frequency band set B may be reused by the MSS terminal. Therefore, the FSS terminal can perform access on all frequency bands, and the MSS terminal can perform access only on a part of frequencies (that is, perform access on the frequency band set B, and cannot perform access on the frequency band set A).

In another related technology, for example, if a current area or cell is provided with an FSS service by a GSO satellite for the FSS terminal, and a used band is a Ka band, it may be assumed that the MSS terminal can use the Ka band in the area, or can access the current cell. However, if a current area or cell is provided with an FSS service by an NGSO satellite for the FSS terminal, and a used band is a Ka band, the MSS terminal cannot use the Ka band in the area, or cannot access the current cell.

Therefore, because a type of a terminal corresponding to the FSS is different from a type of a terminal corresponding to the MSS, in current mobility management (for example, in a cell reselection or cell handover process), the MSS terminal may access a cell on an unlicensed frequency.

In view of this, this application provides a communication method. In the method, during cell reselection of a terminal device, a base station broadcasts whether a current cell allows access of an MSS terminal device; or during cell reselection of a terminal device, whether access of an MSS terminal is allowed is determined by using an inter-frequency measurement frequency; or during serving cell handover of a terminal device, a base station performs measurement configuration and handover management based on service information of the terminal device and frequency information of a neighboring cell. This avoids a case that the MSS terminal is handed over to a cell corresponding to an unsupported frequency.

Before the communication method provided in this application is described below, concepts of cell reselection or cell handover by the terminal device are first described in detail.

1. Cell reselection: After the terminal device successfully camps on a cell, if the terminal device does not perform any data service, the terminal device is in a radio resource control (radio resource control, RRC) idle state. RRC_IDLE mobility management mainly refers to cell reselection. The following content related to cell reselection is also applicable to the terminal device in an RRC inactive (INACTIVE) state.

Generally, the terminal device in the RRC idle state or the RRC inactive state measures signal quality of a serving cell and a neighboring cell. If the signal quality of the serving cell is poorer, and the signal quality of the neighboring cell is better, the terminal device actively reselects a cell with a higher priority or better signal quality as a serving cell. This process is usually referred to as cell reselection. Cell reselection is performed by the terminal device, and does not involve signaling exchange between the terminal device and a base station.

Specifically, the overall process of 5G cell reselection is basically the same as those of 2G, 3G, and 4G, namely, the R/S criterion. An overall cell reselection procedure includes three phases: starting neighboring cell measurement, reselection evaluation determining, and cell reselection execution.
(1) Initiating neighboring cell measurement: Determine, based on a measurement start condition, whether to initiate neighboring cell measurement. After determining is initiated, the terminal device measures current signal quality of the serving cell and the neighboring cell. The neighboring cell and the current cell may be intra-frequency or inter-frequency.
(2) Reselection evaluation and decision: The terminal device determines whether the signal quality of the neighboring cell fulfils a cell reselection criteria. If the signal quality of the neighboring cell fulfils the cell reselection criteria, the terminal device performs cell reselection. If the signal quality of the neighboring cell does not fulfil the cell reselection criteria, the terminal device still camps on the current serving cell.
(3) Cell reselection execution: The terminal device performs cell reselection and starts to receive a system message of a new cell. If there is no access restriction (for example, operators configure some reserved cells or cells with access restrictions, and the terminal device cannot access such cells), the terminal device camps on the new cell.

### 2. Cell handover: RRC_CONNECTED mobility management mainly refers to cell handover.

Specifically, the cell handover includes the following procedure:
(1) The gNB determines whether to initiate the handover procedure.

Determining whether to initiate handover mainly includes two factors: A handover function switch is turned on and the signal quality of the serving cell meets a requirement. Generally, the determining of whether the handover function switch is turned on is based on an A1 event (that is, the signal quality of the serving cell is higher than a specific threshold) or an A2 event (that is, the signal quality of the serving cell is lower than a specific threshold).

After the handover initiation decision, the base station selects a processing mode for the handover procedure, including:
Measurement mode: The base station indicates the terminal device to measure signal quality of a measurement object on a per frequency basis based on measurement configuration information, and report the signal quality; and the base station generates a target cell list based on a measurement report reported by the terminal device.

Blind mode: The base station does not indicate the terminal device to measure signal quality of a candidate target cell, but directly generates a target cell or target frequency list based on a priority parameter. In the blind mode, accessing the target cell has a high risk of failure due to the uncertain signal quality of the target cell. Generally, the blind mode is not recommended, and is used only when handover needs to be performed as soon as possible.

(2) The base station may transfer the measurement configuration information to the terminal device in an RRC reconfiguration message.

The measurement configuration information includes a measurement object, a measurement gap (Measurement gap), a report configuration, a triggering quantity, a measurement ID, and the like. Specifically, the measurement object is an object on which the terminal device performs measurement, and includes a synchronization signal block (synchronization signal block, SSB) and/or a physical broadcast channel block (PBCH block), an SSB subcarrier spacing, an SSB-based measurement timing configuration (SSB-based measurement timing configuration, SMTC), a white cell list, and a black cell list. The measurement gap is a time period during which the terminal device leaves a current frequency to perform measurement on another frequency (related to inter-frequency measurement and inter-system measurement). The reporting configuration is a standard for triggering reporting of a measurement report and a format of the measurement report. The triggering quantity is a policy for triggering event reporting. The measurement ID combines a measurement object and a reporting configuration as a set. That is, each measurement ID corresponds to one measurement object and one reporting configuration. A plurality of measurement IDs may correspond to a plurality of measurement objects and a same reporting configuration, or may correspond to one measurement object and a plurality of reporting configurations.

(3) The terminal device performs related measurement based on a measurement configuration, and generates a cell measurement result. Generally, the terminal device measures a plurality of SSB beams of a cell, and consolidates beam-level measurement results to derive cell quality.

(4) After performing measurement based on the measurement configuration information delivered by the base station, the terminal device evaluates measurement reporting. If a measurement reporting condition is met, the terminal device fills in a measurement report and sends the measurement report to the base station.

(5) The base station determines, based on the measurement report, whether there is an appropriate new serving cell. If there is an appropriate new serving cell, handover is performed; or if there is no appropriate new serving cell, the base station waits for the next measurement report. The handover process mainly includes determining a handover policy, including handover and redirection. The handover is a process in which the base station hands over the terminal device from a source serving cell to a target cell without initiating RRC connection release, to ensure service continuity. The redirection is a process in which the base station directly initiates RRC connection release to the terminal device, and indicates the terminal device to select a cell for access on a specific frequency.

(6) The base station finds an appropriate new serving cell, and indicates the terminal device to perform handover.

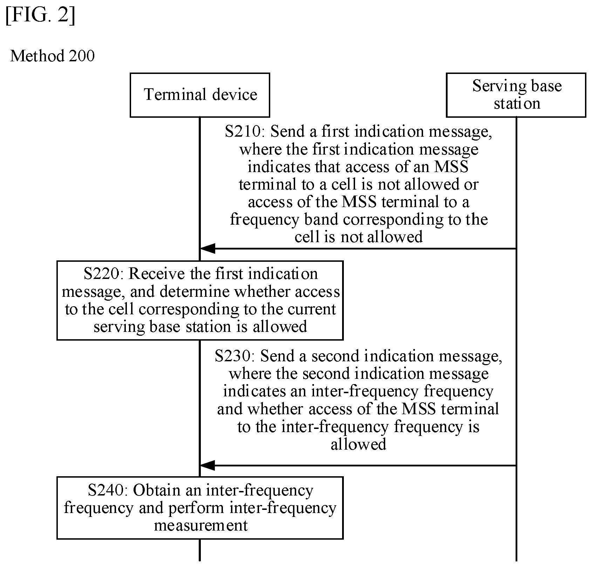

The following describes, with reference to a communication method provided in FIG. 2, how to avoid a case that MSS UE performs access on an unsupported frequency during cell reselection. FIG. 2 is an interaction diagram of a communication method 200 according to an embodiment of this application. The method may be applied to the scenario shown in FIG. 1, or certainly may be applied to another communication scenario. This is not limited in this embodiment of this application.

It should be understood that in this embodiment of this application, the method 200 is described by using an example in which steps of the method 200 are performed by a terminal device and a network device. By way of example but not limitation, the steps of the method 200 may alternatively be performed by a chip used in the terminal device and a chip used in the network device.

As shown in FIG. 2, the method 200 shown in FIG. 2 may include S210 to S240. The following describes in detail the steps in the method 200 with reference to FIG. 2.

S210: A serving base station sends a first indication message, where the first indication message indicates that access of an MSS terminal to a cell is not allowed or access of the MSS terminal to a frequency band corresponding to the cell is not allowed.

In this embodiment of this application, the serving base station may indicate, via the first indication message, whether access of the MSS terminal to a current cell is allowed or whether access of the MSS terminal to a frequency band corresponding to the cell is allowed.

In a possible implementation, the first indication message directly indicates that access of the MSS terminal to the current cell is allowed or access of the MSS terminal to the frequency band corresponding to the cell is allowed. It should be understood that the frequency band of the cell that can be accessed by the MSS terminal is a frequency band to which access of the MSS terminal is allowed.

In another possible implementation, alternatively, the first indication message may directly indicate that the current cell does not allow access of the MSS terminal or access of the MSS terminal is not allowed on the frequency band corresponding to the cell.

Specifically, the serving base station broadcasts the first indication message, and adds a Mobile NTN AccessAllowed indication to the first indication message, to indicate whether access of the MSS UE is allowed on a frequency supported by a cell corresponding to the serving base station or the frequency corresponding to the current cell.

It should be noted that a frequency band is a frequency range, for example, 2515 MHz to 2675 MHz of a mobile operator is a band; a frequency is a point on the band, for example, 2610 MHz is a frequency; a bandwidth is a small part of the band, and the bandwidth is also a frequency segment actually used in communication; and a frequency is a number, and may be understood as an ID of the bandwidth, namely, the frequency segment. Therefore, the frequency supported by the cell corresponding to the serving base station in this embodiment of this application may be understood as an ID of a frequency segment actually used by the cell corresponding to the serving base station in communication.

It should be further noted that the first indication message may be carried in a system message for sending. The system message is information such as system configuration and access information broadcast by a wireless network to a terminal device over a broadcast channel (BCCH). Content of the system message is divided into a plurality of system information blocks (system information blocks, SIBs), and the system message block includes specific information needed by the terminal device to perform procedures such as cell selection, reselection, and handover.

Specifically, the system message includes one master information block (master information block, MIB) and several SIB messages. The MIB is periodically broadcast on a PBCH, and includes basic cell physical layer information needed for cell access barring and further receiving of system information. A SIB1 is periodically broadcast on a PDSCH or is sent to UE in an RRC_CONNECTED state in a dedicated manner, and includes information needed for initial access and scheduling information of another system information block.

In a possible implementation, the serving base station may broadcast a MIB, and add a Mobile NTN AccessAllowed indication to the MIB, to indicate whether the cell corresponding to the serving base station allows access of the MSS UE or whether access of the MSS UE is allowed on the frequency corresponding to the current cell.

In another possible implementation, the serving base station may broadcast a SIB1, and add a Mobile NTN AccessAllowed indication to the SIB1, to indicate whether the cell corresponding to the serving base station allows access of the MSS UE or whether access of the MSS UE is allowed on the frequency corresponding to the current cell.

For example, an FSS terminal has available bands {A, B}, the frequency band set A is dedicated to the FSS UE, and the frequency band set B is reused by the MSS UE. Therefore, the FSS UE can perform access on all bands, but the MSS UE can perform access on only a part of frequencies (that is, the MSS UE can perform access on the frequency band set B, and cannot perform access on the frequency band set A). In this case, when the frequency of the cell corresponding to the serving base station is on the frequency band B, the MIB may be broadcast or the SIB1 may be broadcast, to indicate that the current cell allows access of the MSS UE; or the MIB may be broadcast or the SIB1 may be broadcast, to broadcast that the frequency of the current cell is on the frequency band B and access of the MSS UE is allowed.

Alternatively, when the frequency of the cell corresponding to the serving base station is on the frequency band A, the MIB may be broadcast or the SIB1 may be broadcast, to indicate that the current cell does not allow access of the MSS UE; or the MIB may be broadcast or the SIB1 may be broadcast, to broadcast that the frequency of the current cell is on the frequency band B and access of the MSS UE is not allowed.

For example, it is assumed that the MSS terminal has available bands {C, D}, the frequency band set C is dedicated to the MSS UE, and the frequency band set D is reused by the FSS UE. Therefore, the MSS UE can perform access on all bands, and the FSS UE can perform access only on a part of frequencies (that is, the FSS UE can perform access on the frequency band set D, and cannot perform access on the frequency band set C). Similarly, access management of the FSS UE may be implemented with reference to the foregoing method.

In some other embodiments, the first indication message is carried in the MIB, and an indication value of cellBarred in the MIB is set to barred, to indicate that the MSS terminal does not perform access. Alternatively, the first indication message is carried in the SIB1, and an indication value of cellBarredNTN in the SIB1 is set to barred, to indicate that the MSS terminal does not perform access.

Further, the serving base station may further include third indication information in the MIB. The third indication information indicates that the FSS terminal can perform access to perform intra-frequency reselection; or the third indication information indicates that the FSS terminal can ignore an indication that is in the first indication message and that indicates that access of the MSS terminal is not allowed, that is, the FSS terminal can always access the serving base station to perform intra-frequency reselection.

Alternatively, the serving base station may further include third indication information in the SIB1. The third indication information indicates that the FSS terminal can perform access to perform intra-frequency reselection; or the third indication information indicates that the FSS terminal can ignore an indication that is in the first indication message and that indicates that access of the MSS terminal is not allowed, and indicates that the FSS terminal is always allowed to perform access to perform intra-frequency reselection.

For example, if a current area or cell is served by an NGSO satellite for the FSS terminal, and a used band is a Ka band, the serving base station may send a MIB to the MSS terminal, and set an indication value of cellBarred in the MIB to barred, to indicate that access of the MSS terminal is not allowed; or the serving base station may send a SIB1 to the MSS terminal, and set an indication value of cellBarredNTN in the SIB1 to barred, to indicate that access of the MSS terminal is not allowed. This avoids access of the MSS to a non-permitted band.

Further, the MIB sent by the serving base station may further indicate that the FSS terminal can always perform access to perform intra-frequency reselection, or the MIB may indicate that the FSS terminal can ignore an indication indicating that access of the MSS terminal is not allowed, and indicate that the FSS terminal can always access the serving base station to perform intra-frequency reselection.

S220: The terminal device receives the first indication message sent by the serving base station, and determines whether access to the cell corresponding to the current serving base station is allowed.

It should be noted that the terminal device is an MSS terminal used in an NTN.

The terminal device receives the first indication message sent by the serving base station, where the first indication message may indicate that access of the MSS terminal to the cell is not allowed or access of the MSS terminal to a frequency band corresponding to the cell is not allowed.

Optionally, the MSS terminal ignores an existing cellbarred indication in the MIB or an existing cellBarredNTN indication.

In a possible implementation, the terminal device receives the MIB broadcast by the serving base station, and when a value of the Mobile NTN AccessAllowed indication added to the MIB is true, it indicates that the cell corresponding to the serving base station allows access of the MSS UE. Otherwise, if the Mobile NTN AccessAllowed indication does not exist or a value of the Mobile NTN AccessAllowed indication is false, it indicates that the terminal device cannot access the cell corresponding to the serving base station.

In another possible implementation, the terminal device receives the SIB1 broadcast by the serving base station, and when a value of the Mobile NTN AccessAllowed indication added to the SIB1 is true, it indicates that access of the MSS UE to the cell corresponding to the serving base station is allowed. Otherwise, if the Mobile NTN AccessAllowed indication does not exist or a value of the Mobile NTN AccessAllowed indication is false, it indicates that access of the terminal device to the cell corresponding to the serving base station is not allowed.

S230: The serving base station sends a second indication message to the terminal device, where the second indication message indicates an inter-frequency band and whether access of the MSS terminal to the inter-frequency band is allowed.

In some embodiments, the second indication message is carried in a SIB4, and the serving base station may broadcast the SIB4 to the terminal device. The SIB4 includes an inter-frequency frequency (including a frequency-common cell reselection parameter and a cell-specific reselection parameter).

It should be noted that an intra-frequency frequency means that a cell in which the terminal device is currently located and a target cell to be measured are on a same carrier frequency (a center frequency). The inter-frequency frequency means that a cell in which the terminal device is currently located and a target cell are not on a same carrier frequency, or are on a same carrier, but subcarrier spacings of measurement signals are different.

In embodiments of this application, the inter-frequency frequency may be understood as a frequency different from the frequency of the current cell, and a cell corresponding to the frequency may be a cell corresponding to a neighboring cell base station or a cell corresponding to the serving base station. This is not limited in embodiments of this application.

In some other embodiments, the second indication message sent by the serving base station to the MSS terminal is an intra-frequency reselection indication. For example, an indication value of intraFreqReselection is set to notallowed, to indicate the MSS terminal to perform inter-frequency reselection.

S240: The terminal device obtains an inter-frequency frequency and performs inter-frequency measurement.

When the serving base station broadcasts the SIB4 to send an inter-frequency frequency to the terminal device, the terminal device may read a system message carried in the SIB4, obtain an inter-frequency frequency, and perform measurement.

It should be noted that, inter-frequency measurement means measurement performed on a downlink carrier frequency different from that of the serving cell, and a measurement indicator includes reference signal received power (Reference Signal Received Power, RSRP) and reference signal received quality (Reference Signal Received Quality, RSRQ).

The RSRP is defined as a linear average value of power contributions of resource elements that carry cell-specific reference signals in a measured bandwidth. The RSRQ reflects a signal-to-noise ratio and interference level of current channel quality. The RSRQ is not only related to RE power of the RS, but also related to rated RE power that carries user data and interference of the neighboring cell. Therefore, the RSRP varies with the network load and interference. The greater the network load, the greater the interference, and the smaller the measured RSRQ value.

When the cell corresponding to the serving base station allows access of the MSS UE, the terminal device may determine, based on an inter-frequency measurement result, whether the cell can be accessed.

It should be further noted that, when the cell corresponding to the serving base station does not allow access of the MSS UE, the terminal device may still obtain the system message and perform inter-frequency measurement.

It should be understood that, in the related technology, if the cell corresponding to the serving base station does not allow access of the MSS UE, the terminal device cannot read the system message that is sent by the serving base station and that is carried in the SIB4. In this case, the MSS UE can only perform blind selection for an inter-frequency frequency, to perform inter-frequency measurement for cell reselection. This manner may result in a high risk of access failure.

In this embodiment of this application, even if the cell corresponding to the serving base station does not allow access of the MSS UE, and the MSS UE cannot camp on the current cell, the terminal device may still choose to read the system message carried in the SIB4, obtain an inter-frequency frequency, and perform cell reselection after performing inter-frequency measurement, so that a success rate of accessing the cell by the MSS UE can be increased.

In the method 200, for a scenario of mobility management in an idle state, the serving base station broadcasts a system message, so that the terminal device obtains a message indicating whether the current cell supports access of the MSS UE, to prevent the terminal device from being handed over to an unsupported frequency during cell reselection. In addition, when the MSS UE cannot access a cell, the MSS UE may also read an inter-frequency frequency broadcast in the system message, to measure a frequency of another inter-frequency neighboring cell, and finally obtain an accessible cell, so as to increase a success rate of accessing the cell by the MSS UE.

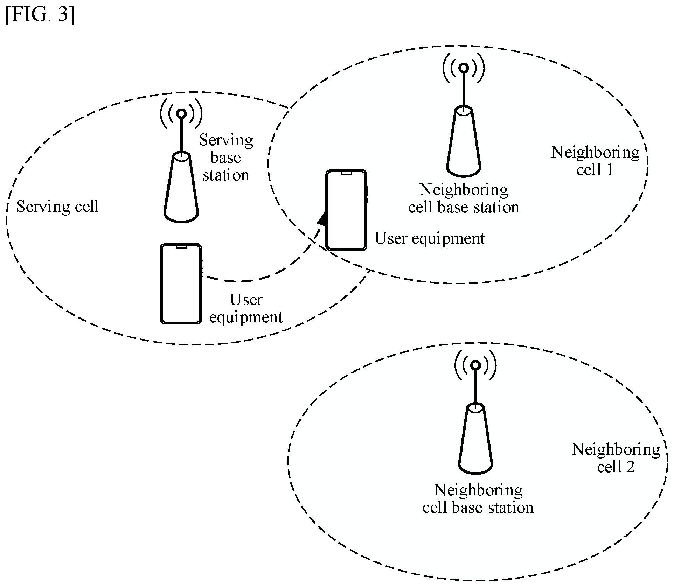

The following describes, with reference to communication methods provided in FIG. 3 to FIG. 6, how to avoid a case that the MSS UE performs access on an unsupported frequency in a mobility management scenario. FIG. 3 is a diagram of a mobility management scenario in a connected state. As shown in FIG. 3, in a process in which a user uses a terminal device, a location of the user may change. When the terminal device moves to an edge of a serving cell (for example, the terminal device moves to a signal overlapping area between a serving cell and a neighboring cell 1), the terminal device needs to be handed over to a neighboring cell in a timely manner, to obtain continuous services of a mobile network. In this scenario, how to avoid a case that the terminal device is handed over to a cell corresponding to an unsupported frequency is a problem that needs to be resolved.

Based on this, an embodiment of this application further provides another communication method. In a mobility management scenario in a connected state, a serving base station may perform measurement configuration and handover management based on service information of a terminal device and neighboring cell frequency information. This avoids a case that the MSS terminal is handed over to a cell corresponding to an unsupported frequency, and consequently cannot obtain a corresponding network service.

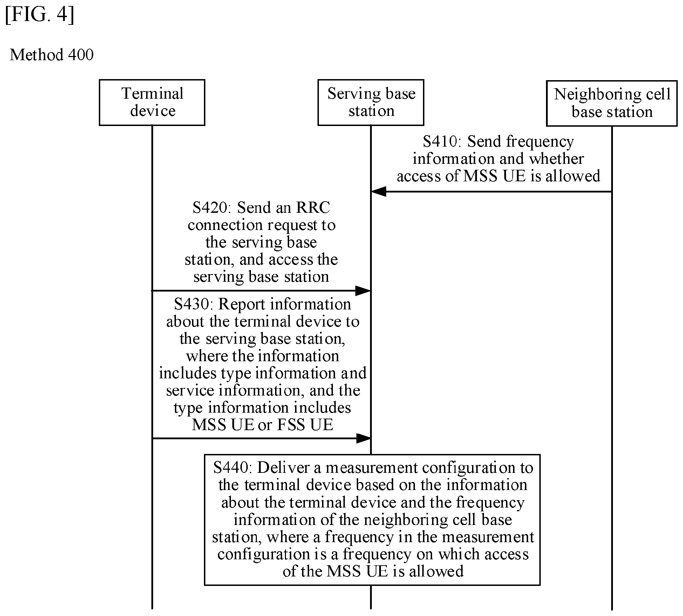

The following uses FIG. 4 as an example to describe in detail another communication method according to an embodiment of this application. FIG. 4 is an interaction diagram of another communication method 400 according to an embodiment of this application. As shown in FIG. 4, the method 400 includes S410 to S440.

It should be understood that in this embodiment of this application, the method 400 is described by using an example in which steps of the method 400 are performed by a terminal device and a network device. By way of example but not limitation, the steps of the method 400 may alternatively be performed by a chip used in the terminal device and a chip used in the network device.

S410: A serving base station obtains frequency information of a neighboring cell base station and whether access of MSS UE is allowed.

It should be understood that, when the MSS UE moves to the neighboring cell base station, to ensure a network service of the MSS UE during movement, and avoid a case that the MSS UE is handed over to a cell corresponding to an unsupported frequency, the serving base station may obtain the frequency information of the neighboring cell base station and whether access of the MSS terminal to the frequency is allowed.

In a possible implementation, the serving base station may obtain, based on an operations, administration, and maintenance (Operations, Administration, and Maintenance, OAM) preconfiguration, the frequency information of the neighboring cell base station and whether access of the MSS UE is allowed.

It should be understood that the preconfiguring the base station based on the OAM means configuring the base station before installation and configuration of the base station are completed. The configuration process includes configuring hardware and software of the base station and configuring the OAM protocol, for example, a base station radio access parameter, for example, an access point, a band, or a password.

In another possible implementation, the serving base station may set up a connection to the neighboring cell base station, and the neighboring cell base station sends, to the serving base station in an Xn setup message, the frequency information and information about whether access of the MSS UE is allowed.

In still another possible implementation, when the serving base station sets up a connection to the neighboring cell base station, the neighboring cell base station sends, to the serving base station in an NG-RAN node configuration update message, the frequency information and information about whether access of the MSS UE is allowed.

S420: A terminal device sends an RRC connection request to the serving base station, and accesses the serving base station.

When the terminal device is in an idle state, the terminal device may send the RRC connection request to the serving base station, to access the serving base station.

Specifically, the terminal device may send an RRC connection setup request (RRC Setup Request) to the serving base station, to set up a connection to the serving base station. The serving base station sends an RRC setup (RRC Setup) message to the terminal device to complete an RRC setup process. After a connection is set up between the terminal device and the serving base station, the terminal device may send an RRC setup complete (RRC Setup Complete) message to the serving base station, to indicate that the terminal device has successfully accessed the serving base station.

S430: The terminal device reports information about the terminal device to the serving base station, where the information includes service information and type information, and the type information includes MSS UE or FSS UE.

It should be understood that because the MSS terminal and the FSS terminal are used at different frequencies, the serving base station needs to determine a type of the terminal device before determining whether the UE can be successfully handed over to the neighboring cell base station.

In a possible implementation, the terminal device may report user assistance information (User assistance information, UAI) to the serving base station, where the UAI carries the type information of the UE. For example, in this embodiment of this application, the UE is MSS UE.

In another possible implementation, the serving base station may send a UE information request to the terminal device, to request the terminal device to report a capability of the terminal device. After receiving the UE information request, the terminal device reports a UE information response message to the serving base station, where the message may carry the type information of the UE. For example, in this embodiment of this application, the UE is MSS UE.

In still another possible implementation, after an RRC connection is set up between the terminal device and the serving base station, the AMF delivers subscription information to the serving base station, and the serving base station may obtain the service information of the terminal device based on the subscription information.

For example, the AMF sends an initial context setup request (initial context setup request) message to the serving base station, to start an initial context setup process, where the message carries the subscription information of the UE; and the serving base station may obtain the service information of the UE based on the received subscription information.

It should be understood that the AMF is a control plane network function provided by the operator network, and is responsible for access control and mobility management for the terminal device to access the operator network, for example, including functions such as mobility state management, allocation of user temporary identity, and user authentication and authorization. Therefore, the AMF may obtain the subscription information between the UE and the operator.

In another possible implementation, during handover from a source base station to a target base station, the source base station sends a handover request message to the current serving base station through an Xn interface, where the handover request (handover request) message carries the service information of the UE. For example, in this embodiment of this application, the UE is MSS UE.

Alternatively, during handover from a source base station to a target base station, the source base station sends a retrieve UE context request (retrieve UE context request) message to the serving base station, where the retrieve UE context request message carries the service information of the UE. For example, in this embodiment of this application, the UE is MSS UE.

S440: The serving base station delivers a measurement configuration to the terminal device based on the information about the terminal device and the frequency information of the neighboring cell base station, where a frequency in the measurement configuration is a frequency on which access of the MSS UE is allowed.

After obtaining the service information of the terminal device and the frequency information of the neighboring cell base station, the serving base station sends the measurement configuration to the terminal device based on the service information of the terminal device and the frequency information of the neighboring cell base station. The frequency corresponding to the measurement configuration is a frequency on which access of the MSS UE is allowed.

For example, it is assumed that the frequency on which the MSS UE can perform access is a frequency band set B. A frequency of a neighboring cell base station 1 obtained by the serving base station is a frequency B, and access of the MSS UE is allowed on the frequency B. A frequency of a neighboring cell base station 2 is a frequency C, and access of the MSS UE is not allowed on the frequency C. In addition, the serving base station learns that the terminal device to be handed over is an MSS terminal. In this case, the serving base station sends a measurement configuration to the terminal device, and in the measurement configuration, channel quality measurement is performed on a cell corresponding to the neighboring cell base station 1 by using the frequency B as a unit and is reported. Finally, the serving base station generates a target cell list based on a measurement report reported by the terminal device.

In the method 400, after obtaining the information about the terminal device, the frequency of the neighboring cell base station, and the information about whether access of the MSS UE is allowed on the frequency, the serving base station delivers a measurement configuration to the terminal device based on the information about the terminal device, the frequency of the neighboring cell base station, and whether access of the MSS UE is allowed on the frequency, so that the terminal device can perform channel quality measurement based on the frequency on which access can be performed. This avoids a case in which the terminal device cannot perform channel quality measurement because the terminal device is handed over to an unsupported frequency during handover.

In the method 400, after obtaining a frequency type of the neighboring cell base station, the serving base station delivers the measurement configuration to the terminal device, to avoid a case that the terminal device is handed over to an unsupported frequency during reselection. An embodiment of this application further provides another communication method 500. In the method, a serving base station does not know the frequency type corresponding to a neighboring cell base station. When the serving base station initiates a cell handover request, a target base station before handover determines whether a terminal device can access a cell. If the frequency corresponding to the target base station does not allow access, rejection is fed back. The method can avoid a case that the terminal device is handed over to an unsupported frequency during handover and cannot measure channel quality.

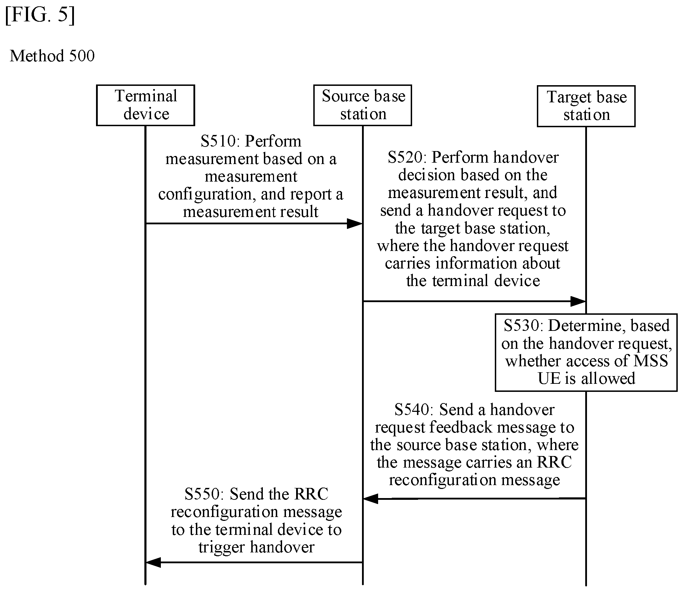

The following uses FIG. 5 as an example to describe in detail another communication method according to an embodiment of this application. FIG. 5 is an interaction diagram of another communication method 500 according to an embodiment of this application. As shown in FIG. 5, the method 500 includes S510 to S550.

It should be understood that in this embodiment of this application, the method 500 is described by using an example in which steps of the method 500 are performed by a terminal device and a network device. By way of example but not limitation, the steps of the method 500 may alternatively be performed by a chip used in the terminal device and a chip used in the network device.

S510: A terminal device performs measurement based on a measurement configuration, and reports a measurement result.

In a mobility management scenario of the terminal device in a connected state, when the terminal device needs to perform cell handover, a source base station delivers a measurement configuration to the terminal device, and the terminal device measures channel quality of a target cell and reports a measurement report.

In this embodiment of this application, because the source base station does not know frequency information of a neighboring cell base station, frequencies configured in the measurement configuration delivered by the source base station to the terminal device include a frequency on which access of MSS UE is allowed and a frequency on which access of the MSS UE is not allowed.

It should be understood that content of the measurement result mainly includes: a measurement identifier (where the network may obtain, based on the identifier by using a measurement configuration stored in the network, a measurement object ID and a reporting configuration ID that correspond to the current reporting, a measurement event threshold triggered by an event, a periodic triggering purpose, and the like), a serving cell measurement result (including a cell ID, a cell measurement result like RSRP, a measurement result for a reference signal (for example, a measurement result for a single SSB), and the like), and a neighboring cell measurement result (including a cell ID, a triggering quantity corresponding to the cell, and the like).

S520: The source base station performs handover decision based on the measurement result, and sends a handover request to a target base station, where the handover request carries information about the terminal device.

It should be understood that a cell handover policy generally includes cell handover and redirection. The handover is a process in which the source base station hands over the terminal device from a source serving cell to a target cell without initiating RRC connection release, to ensure service continuity. The redirection is a process in which the base station directly initiates RRC connection release to the terminal device, and indicates the terminal device to select a cell for access on a specific frequency. Generally, handover is preferentially selected as the handover policy. The terminal device selects the redirection handover policy only when the terminal device does not support handover or handover cannot be performed in a timely manner.

In some embodiments, in this embodiment of this application, according to the selected handover policy, after selecting and determining a target cell based on the measurement result, the source base station sends the handover request to the target base station. The target cell may be a cell with a strongest signal (RSRP/RSRQ) selected by the source base station as the target cell based on the measurement result.

In some other embodiments, the terminal device may alternatively perform handover based on redirection measurement. The handover policy is not specifically limited in this embodiment of this application.

Further, to ensure that the MSS UE can successfully perform access on a supported frequency, when the source base station does not know a frequency corresponding to the target base station and whether access of the MSS UE is allowed on the frequency, the source base station may include the information about the terminal device in the handover request when sending the handover request to the target base station, and the target base station determines whether the MSS UE can perform access.

In some possible implementations, for a manner in which the source base station obtains the information about the terminal device, refer to the descriptions of step S430. Details are not described herein again.

It should be noted that there is at least one target base station in step S520. To be specific, the source base station sends a handover request message to the at least one target base station, and each handover request message carries the information about the terminal device.

S530: The target base station determines, based on the handover request, whether access of the MSS UE is allowed.

In this embodiment of this application, the target base station may determine, based on a frequency corresponding to a current cell and a type of the terminal device carried in the handover request, whether access of the terminal device is allowed.

For example, it is assumed that a frequency on which the MSS UE can perform access is a frequency B. When a frequency of a cell corresponding to the target base station is a frequency A, and the type of the terminal device carried in the handover request is the MSS UE, the MSS UE cannot perform access on the frequency A. In this case, the target base station does not allow access of the terminal device.

For another example, when a frequency of a cell corresponding to the target base station is a frequency B, and the type of the terminal device carried in the handover request is the MSS UE, the MSS UE can perform access on the frequency B. In this case, the target base station allows access of the terminal device.

S540: The target base station sends a handover request feedback message to the source base station, where the message carries an RRC reconfiguration message.

S550: The source base station sends the RRC reconfiguration message to the terminal device to trigger handover.

It should be noted that, when the at least one target base station sends a handover request feedback message to the source base station, the source base station may determine, based on a plurality of target base stations, a target base station to which the terminal device is finally handed over, and then the source base station sends, to the terminal device, an RRC reconfiguration message sent by the target base station to which the terminal device is finally handed over.

In the method 500, during handover from the source base station to the target base station, the target base station may obtain the information about the terminal device, and then determine, based on frequency information of a current cell corresponding to the target base station, whether the terminal device can access the current cell. If the terminal device cannot access the current cell, the target base station feeds back access rejection to the source base station. If the terminal device can access the current cell, the target base station feeds back RRC reconfiguration to the source base station, so that the terminal device can be successfully handed over to the target base station. In the method, the target base station may determine, based on the information about the terminal device and the frequency information of the current cell corresponding to the target base station, whether access of the terminal device is allowed, to avoid a case that the terminal device is handed over to an unsupported frequency during the handover.

In the method 500, the target base station may determine, based on service information of the terminal device and frequency information of a current cell corresponding to the target base station, whether access of the terminal device is allowed. An embodiment of this application further provides another communication method 600. In the method, a plurality of target base stations may feed back frequency information of a corresponding cell to a source base station, and the source base station may perform determining, based on service information of a terminal device and frequency information of a cell corresponding to a target base station, to determine whether the terminal device can be handed over to a supported frequency after handover.

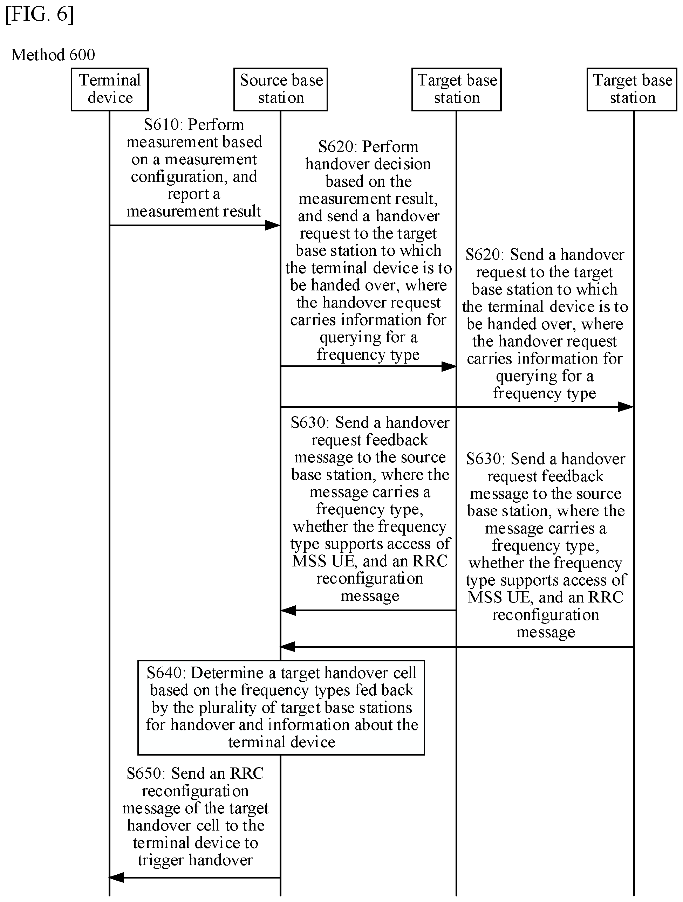

The following uses FIG. 6 as an example to describe in detail another communication method according to an embodiment of this application. FIG. 6 is an interaction diagram of another communication method 600 according to an embodiment of this application. As shown in FIG. 6, the method 600 includes S610 to S650.

It should be understood that in this embodiment of this application, the method 600 is described by using an example in which steps of the method 600 are performed by a terminal device and a network device. By way of example but not limitation, the steps of the method 600 may alternatively be performed by a chip used in the terminal device and a chip used in the network device.

S610: A terminal device performs measurement based on a measurement configuration, and reports a measurement result.

For descriptions of step S610, refer to the descriptions of step S510. Details are not described herein again.

S620: A source base station performs handover decision based on the measurement result, and sends handover requests to a plurality of target base stations for handover, where the handover request carries information for querying for a frequency type.

In this embodiment of this application, to avoid a case that the terminal device is handed over to an unsupported frequency during handover from the source base station to the target base station, the source base station may send handover request (Handover request) messages based on the plurality of target base stations for handover determined in the measurement result, and the message carries the information for querying for a frequency type, to obtain frequency types of the plurality of target base stations for handover and whether access of MSS UE is supported on the frequency.

S630: The plurality of target base stations for handover each send a handover request feedback message to the source base station, where the message carries a frequency type, whether the frequency type supports access of the MSS UE, and an RRC reconfiguration message.

The plurality of target base stations for handover each feed back, to the source base station based on the handover request messages sent by the source base station, a frequency type supported by a corresponding cell and whether the frequency type supports access of the MSS UE.

In a possible implementation, the plurality of target base stations for handover each may feed back, to the source base station based on handover request acknowledge (Handover request acknowledge) messages, a frequency type supported by a corresponding cell and whether the frequency type supports access of the MSS UE.

S640: The source base station determines a target handover cell based on the frequency types fed back by the plurality of target base stations for handover and information about the terminal device.

To ensure that the terminal device can successfully perform access on a supported frequency, before the terminal device is handed over from the source base station to the target base station, the source base station may determine, based on the frequency types fed back by the plurality of target base stations for handover and a type of the terminal device, a target cell to which the terminal device is to be handed over.

It should be noted that for a manner in which the source base station obtains the information about the terminal device, refer to the descriptions of step S430. Details are not described herein again.

S650: The source base station sends an RRC reconfiguration message of the target handover cell to the terminal device to trigger handover.

In the method 600, during handover from the source base station to the target base station, the source base station obtains the frequency types fed back by the plurality of target base stations for handover and the type of the terminal device, and determines, based on the frequency types fed back by the plurality of target base stations for handover and the information about the terminal device, a target cell to which the terminal device can be handed over; and then, the source base station sends a handover request to the target cell to which the terminal device can be handed over, so that the terminal device can be successfully handed over to the target base station. In the method, the source base station may determine, based on service information of the terminal device and frequency information of current cells corresponding to the plurality of target base stations for handover, the target cell to which the terminal device can be handed over, so that the terminal device is prevented from being handed over to an unsupported frequency during the handover.

It should be understood that, division into manners, cases, categories, and embodiments in embodiments of this application are merely for ease of description, and should not constitute a special limitation. Features in various manners, categories, cases, and embodiments may be combined without contradiction.

It should be further understood that, the foregoing descriptions are merely intended to help a person skilled in the art better understand embodiments of this application, instead of limiting the scope of embodiments of this application. It is apparent that a person skilled in the art may make various equivalent modifications or changes based on the examples provided above. For example, some steps in the method 300 and the method 400 may be unnecessary, some steps may be newly added, or the like. Alternatively, any two or more of the foregoing embodiments are combined. A modified, changed, or combined solution also falls within the scope of embodiments of this application.

It should be further understood that the foregoing descriptions of embodiments of this application emphasize differences between the embodiments. For same or similar parts that are not mentioned, refer to the embodiments. For brevity, details are not described herein again.

It should be further understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, "presetting" and "predefining" may be implemented by prestoring corresponding code or a corresponding table on a device (for example, including the terminal device and the network device), or in another manner that may be used to indicate related information. A specific implementation thereof is not limited in this application.

It should be further understood that, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

The foregoing describes in detail examples of the communication method provided in this application. It may be understood that, to implement the foregoing functions, the authentication server function, the terminal device, and the unified data management include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes a communication apparatus according to this application.

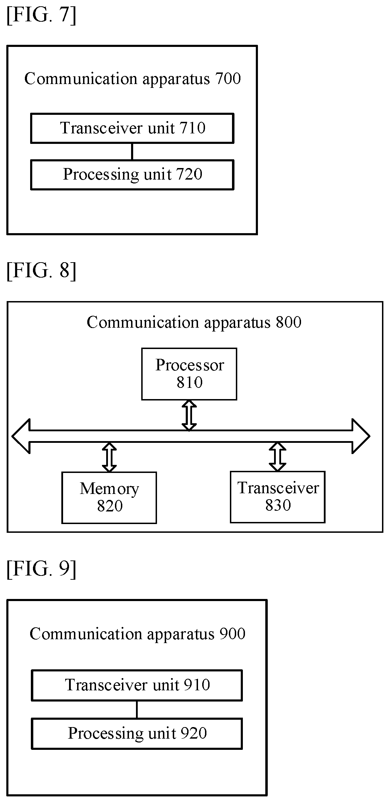

For example, FIG. 7 is a block diagram of a communication apparatus 700 according to an embodiment of this application. The communication apparatus 700 may correspond to the serving base station, the source base station, and the target base station described in the embodiments of the method 200 to the method 600, or may be chips or components used in the serving base station, the source base station, and the target base station. In addition, modules or units in the communication apparatus 700 are separately configured to perform actions or processing processes performed by the serving base station, the source base station, and the target base station described in the embodiments of the method 200 to the method 400.

As shown in FIG. 7, the communication apparatus 700 includes a transceiver unit 710 and a processing unit 720. The transceiver unit 710 is configured to specifically send or receive a signal under driving of the processing unit 720.

In some embodiments,
the transceiver unit 710 is configured to send a first indication message, where the first indication message indicates that access of an MSS terminal to a cell is not allowed or access of the MSS terminal to a frequency band corresponding to the cell is not allowed.

According to the communication apparatus provided in this application, when a frequency band corresponding to an FSS terminal is reused by the MSS terminal, to avoid a case that the MSS accesses a non-permitted frequency band, a serving base station serving the FSS terminal may send a first indication message to the MSS terminal, where the first indication message may indicate that a cell corresponding to the current serving base station does not allow access of the MSS terminal or access of the MSS terminal is not allowed on a frequency band corresponding to the current serving base station, and the MSS terminal may reject access to the cell based on the first indication message. This resolves a problem in the related technology that when the frequency band corresponding to the FSS terminal is reused by the MSS terminal, the MSS terminal may access a non-permitted frequency band.

It should be noted that the communication apparatus corresponds to the serving base station or a chip or a component used in the serving base station.

In some other embodiments,
the transceiver unit 710 is configured to obtain frequency information of a neighboring cell base station and information about a terminal device, where the frequency information includes a frequency and whether access of an MSS terminal to the frequency is allowed, the information about the terminal device includes type information of the terminal device and service information of the terminal device, and the type information includes an MSS terminal and an FSS terminal; and
the processing unit 720 is configured to deliver a measurement configuration to the terminal device based on the frequency information of the neighboring cell base station and the information about the terminal device, where a frequency in the measurement configuration is a frequency to which access of the MSS terminal is allowed.

The communication apparatus provided in this application may determine, based on the obtained frequency information of the neighboring cell base station and the obtained information about the terminal device, a frequency to which access of the MSS terminal can be performed. Therefore, a measurement frequency in the measurement configuration delivered by the serving base station to the MSS terminal is a frequency to which access of the MSS terminal is allowed. This resolves a problem in the related technology that the MSS terminal may perform access on an unsupported frequency.

It should be noted that the communication apparatus corresponds to the serving base station or a chip or a component used in the serving base station.

In still some other embodiments,
the transceiver unit 710 is configured to receive a handover request sent by a source base station, where the handover request carries service information of the terminal device, and the service information includes an MSS terminal and an FSS terminal;
the processing unit 720 is configured to determine, based on frequency information of a current cell and the information about the terminal device, whether access of the MSS terminal is allowed; and
the transceiver unit 710 is further configured to send a handover request feedback message to the source base station, where the handover request feedback message includes: access of the MSS terminal is allowed or access of the MSS terminal is not allowed.

After receiving the service information of the terminal device and the frequency information of the current cell that are included in the source base station, the communication apparatus provided in this application may determine whether the frequency information corresponding to access of the MSS terminal to the current cell is allowed. If the access of the MSS terminal is allowed, access allowed is fed back to the source base station that access is allowed. If the access of the MSS terminal is not allowed, access not allowed is fed back to the source base station. According to this method, the MSS terminal can be prevented from performing access on an unsupported frequency during cell handover.

It should be noted that the communication apparatus corresponds to the target base station or a chip or a component used in the target base station.

In still some other embodiments,
the transceiver unit 710 is configured to send a handover request message to at least one target base station, where the handover request message carries frequency query information, and the frequency query information includes: querying for a frequency of a current cell corresponding to the target base station and whether access of an MSS terminal to the frequency is allowed;
the transceiver unit 710 is further configured to receive a handover request feedback message sent by the at least one target base station, where the handover request feedback message carries frequency feedback information, and the frequency feedback information includes the frequency of the current cell respectively corresponding to the at least one target base station and whether access of the MSS terminal to the frequency is allowed; and
the processing unit 720 is configured to determine a target handover cell based on at least one piece of frequency feedback information and information about a terminal device, where access of the MSS terminal is supported on a frequency corresponding to the target handover cell.

After obtaining information that is fed back by the at least one target base station and that is about the frequency of the current cell and whether access of the MSS terminal to the frequency is allowed, the communication apparatus provided in this application determines a target handover cell from the at least one target base station based on the service information of the terminal device, where access of the MSS terminal to the frequency is allowed corresponding to the target handover cell. In the method, determining performed by a source base station can prevent the MSS terminal from performing access on an unsupported frequency during cell handover.

It should be noted that the communication apparatus corresponds to the source base station or a chip or a component used in the source base station.

In still some other embodiments,
the transceiver unit 710 is further configured to receive a handover request message sent by a source base station, where the handover request message carries frequency query information, and the frequency query information includes: querying for a frequency of a current cell corresponding to the target base station and whether access of an MSS terminal to the frequency is allowed; and
the transceiver unit 710 is further configured to send handover request feedback information to the source base station based on the handover request message, where the handover request feedback information carries frequency feedback information, and the frequency feedback information includes a frequency of a current cell respectively corresponding to at least one target base station and whether access of the MSS terminal to the frequency is allowed, where
the frequency feedback information is used by the source base station to determine a target handover cell, and access of a terminal device to a frequency corresponding to the target handover cell is supported.

After receiving the frequency query information carried in the handover request message, the communication apparatus provided in this application may feed back, to the source base station, the frequency of the current cell and whether access of the MSS terminal to the frequency is allowed. In this way, the source base station can determine a target handover cell from the at least one target base station based on the service information of the terminal device and the frequency feedback information, where access of the MSS terminal is allowed on a frequency corresponding to the target handover cell. In the method, determining performed by a source base station can prevent the MSS terminal from performing access on an unsupported frequency during cell handover.

It should be noted that the communication apparatus corresponds to the target base station or a chip or a component used in the target base station.

It should be understood that, for a specific process in which the units in the communication apparatus 700 perform the foregoing corresponding steps, refer to the foregoing descriptions related to the serving base station, the source base station, and the target base station with reference to the method 200 to the method 600 and the related embodiments in FIG. 2 and FIG. 6. For example, the transceiver unit 710 may perform receiving and sending steps in the foregoing method embodiments, and the processing unit 720 may perform steps other than receiving and sending. Various specific processing is described in the method embodiment. For brevity, details are not described herein again.

It should be understood that, the transceiver unit 710 may be a transceiver, an input/output interface, or an interface circuit. The storage unit may be a memory. The processing unit 720 may be implemented by a processor. FIG. 8 is a block diagram of another communication apparatus 800 according to an embodiment of this application. As shown in FIG. 8, the communication apparatus 800 may include a processor 810, a memory 820, and a transceiver 830.

The communication apparatus 700 shown in FIG. 7 or the communication apparatus 800 shown in FIG. 8 can implement the steps performed by the serving base station, the source base station, and the target base station in the embodiments of the method 200 to the method 600. For similar descriptions, refer to the descriptions in the foregoing corresponding methods. To avoid repetition, details are not described herein again.

It should be further understood that the communication apparatus 700 shown in FIG. 7 or the communication apparatus 800 shown in FIG. 8 may be a serving base station, a source base station, or a target base station.

FIG. 9 is a block diagram of a communication apparatus 900 according to an embodiment of this application. The communication apparatus 900 may correspond to the terminal device described in the method 200 and the method 600, or may be a chip or a component used in the terminal device. In addition, modules or units in the communication apparatus 900 are separately configured to perform actions or processing processes performed by the terminal device in the method 200 and the method 600.

As shown in FIG. 9, the communication apparatus 900 may include a transceiver unit 910 and a processing unit 920. The transceiver unit 910 is configured to specifically send or receive a signal under driving of the processing unit 920.

In some embodiments,
the transceiver unit 910 is configured to receive a first indication message, where the first indication message indicates that access of the MSS terminal to a cell is not allowed or access of the MSS terminal to a frequency band corresponding to the cell is not allowed; and
the processing unit 920 is configured to reject, based on the first indication message, access to the cell corresponding to the serving base station.

Through the communication apparatus provided in this application, when the MSS terminal reuses a frequency band used by an FSS terminal, to avoid access to a non-permitted frequency band, the MSS terminal receives a first indication message sent by the FSS terminal, where the first indication message may indicate that a cell corresponding to the current serving base station does not allow access of the MSS terminal or access of the MSS terminal is not allowed on a frequency band corresponding to the current serving base station; and the MSS terminal may reject access to the cell based on the first indication message. This resolves a problem in the related technology that when the frequency band corresponding to the FSS terminal is reused by the MSS terminal, the MSS terminal may access a non-permitted frequency band.

It should be noted that the communication apparatus corresponds to an MSS terminal used in an NTN or a chip or a component of the MSS terminal used in the NTN.

It should be understood that, for a specific process in which the units in the communication apparatus 900 perform the foregoing corresponding steps, refer to the foregoing descriptions related to the terminal device with reference to the related embodiments in the method 200 and the method 600. For example, the transceiver unit 910 may perform receiving and sending steps in the foregoing method embodiments, and the processing unit 920 may perform steps other than receiving and sending. Various specific processing methods are described in the method embodiments. For brevity, details are not described herein again.

Optionally, the transceiver unit 910 may include a receiving unit (module) and a sending unit (module), configured to perform the steps of receiving information and sending information by the terminal device in the embodiments of the method 200 and the method 600.

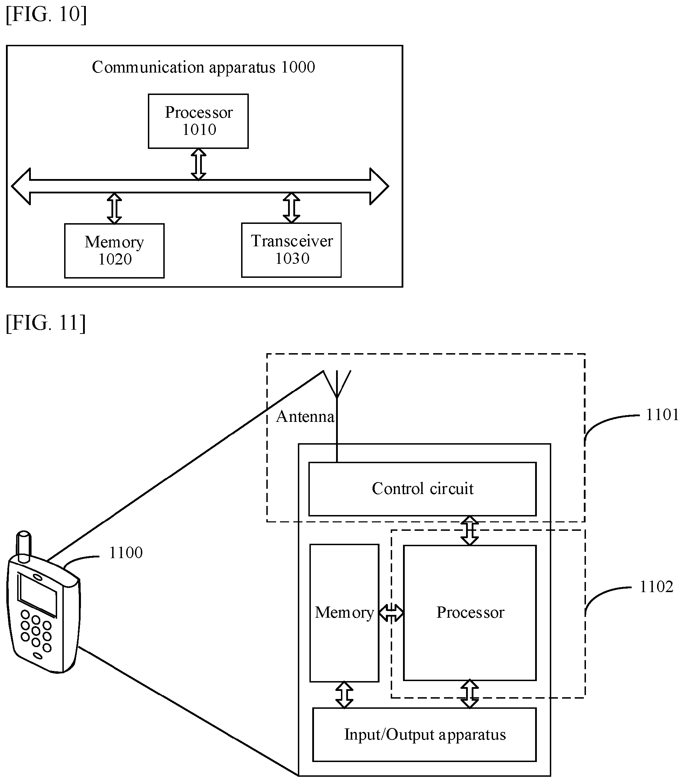

It should be understood that, the transceiver unit 910 may be a transceiver, an input/output interface, or an interface circuit. The storage unit may be a memory. The processing unit 920 may be implemented by a processor. FIG. 10 is a block diagram of another communication apparatus 1000 according to an embodiment of this application. As shown in FIG. 10, the communication apparatus 1000 may include a processor 1010, a memory 1020, and a transceiver 1030.

The communication apparatus 900 shown in FIG. 9 or the communication apparatus 1000 shown in FIG. 10 can implement the steps performed by the terminal device in the embodiments of the method 200 and the method 600. For similar descriptions, refer to the descriptions in the foregoing corresponding methods. To avoid repetition, details are not described herein again.

It should be further understood that the communication apparatus 900 shown in FIG. 9 or the communication apparatus 1000 shown in FIG. 10 may be a terminal device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when units in an apparatus are implemented in a form of scheduling a program by a processing element, the processing element may be a general-purpose processor, for example, a central processing unit (central processing unit, CPU) or another processor that can invoke a program. For still another example, the units may be integrated and implemented in a form of a system-on-a-chip (system-on-a-chip, SoC).

FIG. 11 is a diagram of a structure of a terminal device 1100 according to this application. The terminal device may be configured to implement a function of the MSS terminal in the foregoing method. The communication apparatus 900 or the communication apparatus 1000 may be configured in the terminal device 1100. Alternatively, the communication apparatus 900 or the communication apparatus 1000 may be the terminal device 1100. In other words, the terminal device 1100 may perform actions performed by the MSS terminal in the method 200 to the method 600. Optionally, for ease of description, FIG. 11 shows only main components of the terminal device. As shown in FIG. 11, the terminal device 1100 includes a processor, a memory, a control circuit, an antenna, and an input/output apparatus.

The processor is mainly configured to process a communication protocol and communication data, control an entire terminal device, execute a software program, and process data of the software program, for example, is configured to support the terminal device to perform the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, a keyboard, is mainly configured to: receive data by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 11 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to improve a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 1101 of the terminal device 1100, and the processor that has a processing function may be considered as a processing unit 1102 of the terminal device 1100. As shown in FIG. 11, the terminal device 1100 includes the transceiver unit 1101 and the processing unit 1102. The transceiver unit may also be referred to as a transceiver, a transceiver machine, a transceiver apparatus, or the like. Optionally, a component configured to implement a receiving function in the transceiver unit 1101 may be considered as a receiving unit, and a component configured to implement a sending function in the transceiver unit 1101 may be considered as a sending unit. In other words, the transceiver unit 1101 includes a receiving unit and a sending unit. For example, the receiving unit may also be referred to as a receiver, a receiver machine, or a receiving circuit, and the sending unit may also be referred to as a transmitter, a transmit machine, or a transmitting circuit.

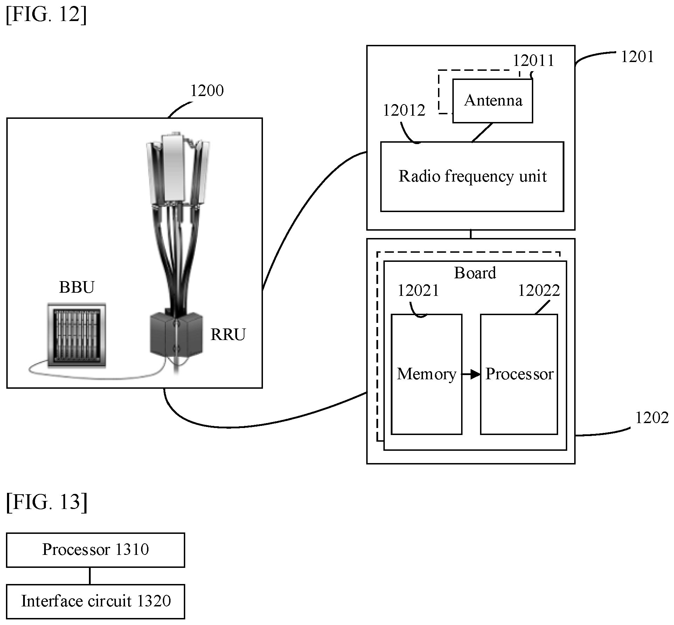

FIG. 12 is a diagram of a structure of a network device 1200 according to an embodiment of this application. The network device may be configured to implement functions of the serving base station, the source base station, and the target base station in the foregoing methods. The network device 1200 includes one or more radio frequency units, such as a remote radio unit (remote radio unit, RRU) 1201 and one or more baseband units (baseband units, BBUs) (which may also be referred to as digital units (digital units, DUs)) 1202. The RRU 1201 may be referred to as a transceiver unit, a transceiver machine, a transceiver circuit, a transceiver, or the like, and may include at least one antenna 12011 and a radio frequency unit 12012. The RRU 1201 is mainly configured for transmission and reception of radio frequency signals and conversion between radio frequency signals and baseband signals, for example, sending the signaling message in the foregoing embodiment to a terminal device. The BBU 1202 is mainly configured to: perform baseband processing, control a base station, and the like. The RRU 1201 and the BBU 1202 may be physically disposed together, or may be physically disposed separately, in other words, in a distributed base station.

The BBU 1202 is a control center of the base station, may also be referred to as a processing unit, and is mainly configured to implement baseband processing functions, such as channel coding, multiplexing, modulation, and spread spectrum. For example, the BBU (the processing unit) 1202 may be configured to control the base station to perform an operation procedure related to the network device in the foregoing method embodiments.

In an example, the BBU 1202 may include one or more boards. A plurality of boards may jointly support a radio access network (for example, an LTE system or a 5G system) of a single access standard, or may respectively support radio access networks of different access standards. The BBU 1202 further includes a memory 12021 and a processor 12022. The memory 12021 is configured to store necessary instructions and necessary data. For example, the memory 12021 stores the codebook and the like in the foregoing embodiments. The processor 12022 is configured to control the base station to perform a necessary action, for example, configured to control the base station to perform an operation procedure related to the network device in the foregoing method embodiments. The memory 12021 and the processor 12022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-a-chip (System-on-a-chip, SoC) technology, all or some functions of the part 1202 and the part 1201 may be implemented by using the SoC technology, for example, implemented by using a base station function chip. The base station function chip integrates components such as a processor, a memory, and an antenna interface. A program used to perform a related function of the base station is stored in the memory. The processor executes the program to implement the related function of the base station. Optionally, the base station function chip can also read from an external memory of the chip, to implement the base station-related function.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when units in an apparatus are implemented in a form of scheduling a program by a processing element, the processing element may be a general-purpose processor, for example, a central processing unit (central processing unit, CPU) or another processor that can invoke a program. For still another example, the units may be integrated and implemented in a form of a system-on-a-chip (system-on-a-chip, SOC).

An embodiment of this application further provides a chip system. As shown in FIG. 13, the chip system includes at least one processor 1310 and at least one interface circuit 1320. The processor 1310 and the interface circuit 1320 may be interconnected through a line. For example, the interface circuit 1320 may be configured to receive a signal from another apparatus (for example, a memory of the terminal device 1100). For another example, the interface circuit 1320 may be configured to send a signal to another apparatus (for example, the processor 1310). For example, the interface circuit 1320 may read instructions stored in a memory, and send the instructions to the processor 1310. When the instructions are executed by the processor 1310, a terminal device is caused to perform the steps performed by the terminal device in the foregoing embodiments. Certainly, the chip system may further include another discrete component. This is not specifically limited in embodiments of this application.

An embodiment of this application further provides a communication system. The system includes the network device (for example, the serving base station) and the terminal device (for example, the MSS terminal) provided in the foregoing method embodiments.

An embodiment of this application further provides a computer-readable storage medium, the computer-readable storage medium is configured to store computer program code. The computer program includes instructions used for performing any communication method provided in the foregoing embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, a serving base station, a source base station, a target base station, and a terminal device are caused to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus is caused to perform any communication method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to the same device.

The terminal device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

It may be understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/ information/devices/network
elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

All or some of the methods in embodiments of this application may be implemented by software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or transmission of the computer programs or the instructions may be performed by using the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a readable storage medium, and includes several instructions for enabling a computer device (which may be a personal computer, a server, or a network device) to perform all or some of the steps of the methods described in embodiments of this application. The readable storage medium includes any medium that can store program code, for example, a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a serving base station, and the method comprises:
sending a first indication message, wherein the first indication message indicates that access of an MSS terminal to a cell is not allowed or access of the MSS terminal to a frequency band corresponding to the cell is not allowed.

2. The method according to claim 1, wherein the MSS terminal is a mobile terminal in a non-terrestrial network NTN.

3. The method according to claim 1 or 2, wherein the first indication message is carried in a master information block MIB or a system information block SIB1.

4. The method according to any one of claims 1 to 3, wherein the method further comprises:
sending a second indication message, wherein the second indication message indicates inter-frequency frequency and whether access of the MSS terminal to the inter-frequency frequency is allowed.

5. The method according to claim 4, wherein the second indication message is carried in a SIB4.

6. A communication method, wherein the method is applied to an MSS terminal, and the method comprises:
receiving a first indication message, wherein the first indication message indicates that access of the MSS terminal to a cell is not allowed or access of the MSS terminal to a frequency band corresponding to the cell is not allowed; and
rejecting access to the cell based on the first indication message.

7. The method according to claim 6, wherein the MSS terminal is a mobile terminal in a non-terrestrial network NTN.

8. The method according to claim 6 or 7, wherein the first indication message is carried in a SIB1 or a MIB.

9. The method according to any one of claims 6 to 8, wherein the method further comprises:
receiving a sent second indication message, wherein the second indication message indicates an inter-frequency frequency and whether access of the MSS terminal to the inter-frequency frequency is allowed; and
performing inter-frequency measurement based on the second indication message.

10. The method according to claim 9, wherein the second indication message is carried in a SIB4.

11. A communication method, wherein the method is applied to a serving base station, and the method comprises:
obtaining frequency information of a neighboring cell base station and information about a terminal device, wherein the frequency information comprises a frequency and whether access of an MSS terminal to the frequency is allowed, the information about the terminal device comprises type information and service information, and the type information comprises an MSS terminal and an FSS terminal; and
delivering a measurement configuration to the terminal device based on the frequency information of the neighboring cell base station and the information about the terminal device, wherein a frequency in the measurement configuration is a frequency to which access of the MSS terminal is allowed.

12. The method according to claim 11, wherein the obtaining the frequency information of the neighboring cell base station comprises:
receiving an Xn message sent by the neighboring cell base station, wherein the Xn message carries the frequency information, and the Xn message comprises any one of an Xn setup message and an NG-RAN node configuration update message.

13. The method according to claim 11 or 12, wherein the obtaining the type information of the terminal device comprises:
receiving user assistance information sent by the terminal device, wherein the user assistance information indicates the type information of the terminal device.

14. The method according to claim 11 or 12, wherein the obtaining the type information of the terminal device comprises:
receiving capability reporting information of the terminal device, wherein the capability reporting information indicates the type information of the terminal device.

15. The method according to claim 11 or 12, wherein the obtaining the service information of the terminal device comprises:
obtaining subscription information sent by a mobility management function AMF, wherein the subscription information indicates the service information of the terminal device.

16. A communication method, wherein the method is applied to a target base station, and the method comprises:
receiving a handover request sent by a source base station, wherein the handover request carries information about a terminal device, the information about the terminal device comprises type information and service information, and the type information comprises an MSS terminal and an FSS terminal;
determining, based on frequency information of a current cell and the information about the terminal device, whether access of the MSS terminal is allowed; and
sending a handover request feedback message to the source base station, wherein the handover request feedback message comprises: access of the MSS terminal is allowed or access of the MSS terminal is not allowed.

17. A communication method, wherein the method is applied to a source base station, and the method comprises:
sending a handover request message to at least one target base station, wherein the handover request message carries frequency query information, and the frequency query information comprises: querying for a frequency of a current cell corresponding to the target base station and whether access of an MSS terminal to the frequency is allowed;
receiving a handover request feedback message sent by the at least one target base station, wherein the handover request feedback message carries frequency feedback information, and the frequency feedback information comprises the frequency of the current cell respectively corresponding to the at least one target base station and whether access of the MSS terminal to the frequency is allowed; and
determining a target handover cell based on at least one piece of frequency feedback information and information about a terminal device, wherein access of the MSS terminal is supported on a frequency corresponding to the target handover cell, the information about the terminal device comprises type information and service information, and the type information comprises an MSS terminal and an FSS terminal.

18. A communication method, wherein the method is applied to a target base station, and the method comprises:
receiving a handover request message sent by a source base station, wherein the handover request message carries frequency query information, and the frequency query information comprises: querying for a frequency of a current cell corresponding to the target base station and whether access of an MSS terminal to the frequency is allowed; and
sending handover request feedback information to the source base station based on the handover request message, wherein the handover request feedback information carries frequency feedback information, and the frequency feedback information comprises a frequency of a current cell respectively corresponding to at least one target base station and whether access of the MSS terminal to the frequency is allowed, wherein
the frequency feedback information is used by the source base station to determine a target handover cell, and access of a terminal device to a frequency corresponding to the target handover cell is supported.

19. A communication apparatus, wherein the apparatus comprises at least one processor,
and the at least one processor is coupled to at least one memory; and
the at least one processor is configured to execute a computer program or instructions in the at least one memory, so that the method according to any one of claims 1 to 5 is performed, the method according to any one of claims 6 to 10 is performed, the method according to any one of claims 11 to 15 is performed, the method according to claim 16 is performed, the method according to claim 17 is performed, or the method according to claim 18 is performed.

20. A computer-readable storage medium, wherein the computer-readable storage medium stores a computer program or instructions, and when a computer reads and executes the computer program or the instructions, the computer is caused to perform the method according to any one of claims 1 to 5, perform the method according to any one of claims 6 to 10, perform the method according to any one of claims 11 to 15, perform the method according to claim 16, perform the method according to claim 17, or perform the method according to claim 18.

21. A chip, comprising a processor, configured to perform the method according to any one of claims 1 to 5, perform the method according to any one of claims 6 to 10, perform the method according to any one of claims 11 to 15, perform the method according to claim 16, perform the method according to claim 17, or perform the method according to claim 18.
